(19) Europäisches Patentamt / European Patent Office / Office européen des brevets

(11) **EP 3 843 260 B1**

(12) **EUROPEAN PATENT SPECIFICATION**

(45) Date of publication and mention of the grant of the patent:
**03.05.2023  Bulletin 2023/18**

(21) Application number: **19851048.9**

(22) Date of filing: **07.08.2019**

(51) International Patent Classification (IPC):
*H02P 6/34* (2016.01)    *G05B 13/02* (2006.01)
*H02P 23/00* (2016.01)    *G05B 19/404* (2006.01)
*G05B 13/04* (2006.01)

(52) Cooperative Patent Classification (CPC):
**H02P 6/34; G05B 19/404; H02P 23/0031;**
G05B 13/044; G05B 2219/34432;
G05B 2219/42153

(86) International application number:
**PCT/JP2019/031202**

(87) International publication number:
**WO 2020/039939 (27.02.2020 Gazette 2020/09)**

(54) **SETTING ASSISTANCE APPARATUS**

EINSTELLHILFSVORRICHTUNG

DISPOSITIF D'AIDE AU RÉGLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **21.08.2018   JP 2018155011**

(43) Date of publication of application:
**30.06.2021   Bulletin 2021/26**

(73) Proprietor: **OMRON CORPORATION**
**Kyoto-shi, Kyoto 600-8530 (JP)**

(72) Inventors:
• **ONO, Yasushi**
**Kizugawa-shi, Kyoto 619-0283 (JP)**
• **EGI, Mamoru**
**Kizugawa-shi, Kyoto 619-0283 (JP)**

(74) Representative: **Becker, Eberhard**
**Becker Kurig & Partner**
**Patentanwälte mbB**
**Bavariastraße 7**
**80336 München (DE)**

(56) References cited:
JP-A- H06 217 578      JP-A- H06 217 578
JP-A- 2003 079 174     JP-A- 2011 244 668
JP-A- 2011 244 668     JP-A- 2017 167 607
JP-A- 2017 167 607     US-A1- 2017 262 573

## Description

[Technical Field]

The present invention relates to a setting assistance apparatus to assist setting of control parameters for a motor control device.

[Background Art]

A motor control device that controls a motor typically has a plurality of control parameters. Also, since optimal values of other control parameters may change due to a value of a certain control parameter, various techniques (see Japanese Unexamined Patent Application Publication No. 2017-167607, for example) for assisting setting of a plurality of parameters for a motor control device have been developed.

JP 2017 167607 A proposes a setting support apparatus including: a test operation instruction part that controls a servo driver to actually execute a test operation by changing at least one value of control parameters or by simulating using a virtual model; and a performance index calculation section that calculates an index of control performance by the servo driver depending on the result of the test operation. JP H06 217578 A proposes a motor speed deviation from a motor speed command being detected by a deviation detector. The output from the deviation detector is input to an adder through a speed control amplifier. The adder is provided with an estimated load torque signal from a load torque estimation observer. The adder sums up these two inputs to output a motor torque, which is then fed to a 2-inertia system model. The estimated load torque signal is fed to an inertia error estimator, which performs arithmetic on the signal. US 2017/262573 A1 proposes a simulation device comprising: a frequency response function computing part computing a frequency response function according to a measured value of a response of a mechanical system, a time response outputting part executing time response simulation, a frequency response outputting part outputting a frequency response characteristic and a display control part displaying the time response simulation and frequency response characteristic simultaneously or selectively. JP 2003 079174 A proposes a motor control equipment being provided with a motor for driving a load machine, a rotation detector for detecting the angle of rotation of the motor, and a servo control unit for controlling the motor. The arithmetic unit compares the calculated values in the frequency characteristics of the two-inertia model and the rigid body model with the minimum errors of the calculated values, respectively.

[Summary of Invention]

[Technical Problem]

As described above, various techniques for assisting setting of a plurality of control parameters for a motor control device have been developed. However, the existing techniques are basically adapted to present, to users, an optimal value for each control parameter on the basis of an output of an encoder attached to a motor, that is, adapted such that each control parameter is set (adjusted) focusing on only a response from a motor shaft.

Moreover, since a behavior of the motor does not always conform to a behavior of the load machine driven by the motor, there may be a case in which the amount of overshooting and the settling time of the motor shaft fall within allowable ranges while the amount of overshooting and the settling time of the load machine do not fall within allowable ranges if each control parameter for the motor control device is set (adjusted) according to the related art.

The present invention was made in view of the aforementioned circumstances, and an objective thereof is to provide a setting assistance apparatus that makes it possible for a user to perform setting of control parameters of a motor control device in a form that considers the responsiveness of the load machine. The present invention is provided by the appended claims. The following disclosure serves a better understanding of the present invention. In the following description, any embodiments referred to and not falling within the scope of the appended claims are merely examples useful for the understanding of the invention.

[Solution to Problem]

A setting assistance apparatus according to an aspect of the present invention is a setting assistance apparatus, for assisting a setting of a plurality of control parameters of a motor control device, the setting assistance apparatus uses an information obtained from an encoder attached to a motor that drives a load machine to control the motor, the setting assistance apparatus including: a specification unit, for each of a plurality of states with mutually different values of a first control parameter among the plurality of control parameters, configured to specify a responsiveness index value indicating a responsiveness of the load machine when the motor control device controls the motor in the each of the plurality of states; and a presentation unit, configured to present to a user the responsiveness index value for the each of the plurality of states specified by the specification unit.

In other words, the setting assistance apparatus according to an aspect of the present invention may present, to the user, a responsiveness index value indicating the responsiveness of the load machine. Therefore, according to the setting assistance apparatus, it is possible for the user to perform setting of control parameters of the motor control device in a form that considers the responsiveness of the load machine.

The specification unit in the setting assistance apparatus may specify a responsiveness index value for each of the plurality of states through a simulation based on a model that approximates a mechanical system including the load machine. Also, the model in the setting assistance apparatus may be a multi-inertia model that takes at least an inertia of the motor and an inertia of the load machine into consideration.

"A model creation unit that measures frequency response characteristics of a system that uses, as an input, a command for the motor and uses, as an output, a result of detecting any of a position, a velocity, and an acceleration of the load machine obtained by a sensor attached to the load machine and creates a model on the basis of a result of measurement" may be added to the setting assistance apparatus. The model creation unit may specify an antiresonance frequency, a resonance frequency, a gain at the antiresonance frequency, a gain at the resonance frequency, and a gain at a frequency that is lower than the antiresonance frequency from the measured frequency response characteristics and create the model on the basis of a result of specifying.

Also, for each of the plurality of states, the specification unit may cause the motor control device to control the motor, collect an output of the sensor attached to the load machine, and specify the responsiveness index value on the basis of the collected output in the state. For the setting assistance apparatus, a configuration in which "the specification unit also specifies, for each of the plurality of states, a motor-side responsiveness index value indicating a responsiveness of a motor shaft of the motor when the motor control device is caused to control the motor in a certain state, and the responsiveness index value specified for each state by the specification unit is presented to a user along with the motor-side responsiveness index value specified for each state by the specification unit" may be employed.

The specification unit in the setting assistance apparatus may specify the motor-side responsiveness index value on the basis of information from the encoder or may specify the motor-side responsiveness index value through a simulation.

The responsiveness index value in the setting assistance apparatus may be information indicating a responsiveness of the load machine in units in a coordinate system of the load machine. For the setting assistance apparatus, a configuration in which "the specification unit specifies, as the responsiveness index value for each of the plurality of states, a first responsiveness index value indicating a first responsiveness of the load machine and a second responsiveness index value indicating a second responsiveness of the load machine, and the presentation unit presents, to a user, the second responsiveness index value in each state in which the first responsiveness index value falls within an allowable range in such a manner that the user is able to ascertain each state in which the first responsiveness index value does not fall in the allowable range" may be employed.

For the setting assistance apparatus, a configuration in which "the specification unit also specifies, for each of the plurality of states, a motor-side performance index value indicating a responsiveness of a motor shaft of the motor when the motor control device is caused to control the motor in the certain state, and for each of the plurality of states, the presentation unit presents, to a user, a value indicating a worse responsiveness from either the performance index value or the motor-side performance index value" may be employed.

Further, for the setting assistance apparatus, a configuration in which "the specification unit specifies the responsiveness index value for each of a plurality of states in which combinations of values of the first control parameter and values of the second control parameter from among the plurality of control parameters are different from each other, and the presentation unit presents, to a user, the responsiveness index value for each of the plurality of states by displaying a contour diagram in which the values of the first control parameter and the values of the second control parameters are represented by one or the other of a vertical axis and a horizontal axis, respectively, and the responsiveness index value is indicated with a color or a luminance" may be employed.

[Advantageous Effects of Invention]

According to the present invention, it is possible for the user to perform a setting of control parameters of a motor control device in a form that considers the responsiveness of a load machine.

[Brief Description of Drawings]

Fig. 1 is an explanatory diagram of a utilization form of a setting assistance apparatus according to a first embodiment of the present invention.
Fig. 2 is a functional block diagram regarding a motor control process function of a control unit in a motor control device for which the setting assistance apparatus assists setting of control parameters.
Fig. 3 is an overview configuration diagram of the setting assistance apparatus according to the first embodiment.
Fig. 4 is an explanatory diagram of frequency response characteristics that a model creation unit measures at the time of creating of a model.
Fig. 5 is an explanatory diagram of the model that the model creation unit creates.
Fig. 6 is an explanatory diagram of an example of a result of measurement of the frequency response characteristics performed by the model creation unit.

Fig. 7A is a frequency-gain characteristics diagram illustrating a relationship between a value obtained in a simulation using the model created by the model creation unit and an actually measured value.

Fig. 7B is a frequency-phase characteristics diagram illustrating a relationship between a value obtained in simulation using the model created by the model creation unit and an actually measured value.

Fig. 8 is an explanatory diagram of a coordinate system conversion function of a responsiveness index value calculation unit.

Fig. 9 is an explanatory diagram of an example of display of evaluation results performed by a display control unit.

Fig. 10 is an explanatory diagram of an example of display of an evaluation result performed by the display control unit.

Fig. 11 is an explanatory diagram of an example of display of an evaluation result performed by the display control unit.

Fig. 12 is an explanatory diagram of an example of display of an evaluation result performed by the display control unit.

Fig. 13 is an overview configuration diagram of a setting assistance apparatus according to a second embodiment of the present invention.

Fig. 14 is a diagram for explaining functions of a model creation unit included in the setting assistance apparatus according to the second embodiment.

Fig. 15 is an overview configuration diagram of a setting assistance apparatus according to a third embodiment of the present invention.

[Description of Embodiments]

Hereinafter, embodiments of the present invention will be described on the basis of drawings.

(First embodiment)

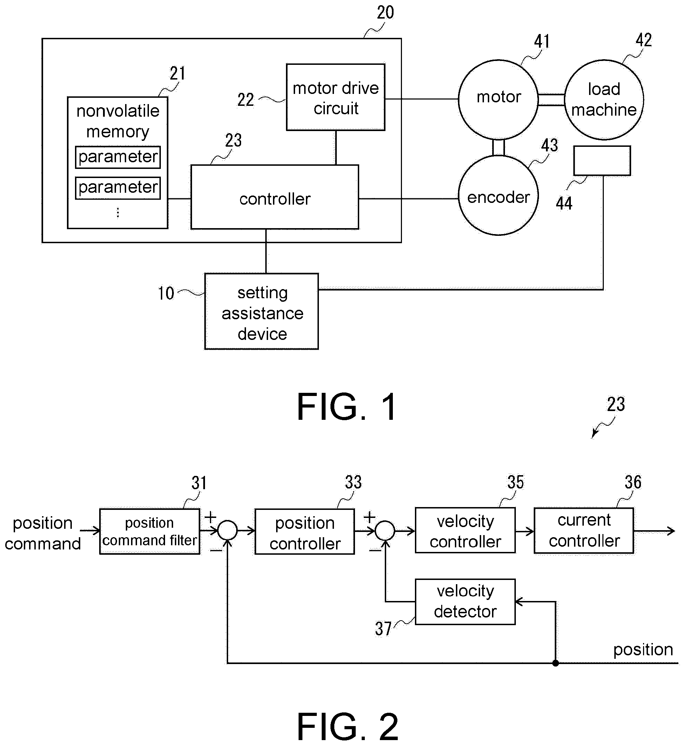

Fig. 1 illustrates a utilization form of a setting assistance apparatus 10 according to a first embodiment of the present invention.

The setting assistance apparatus 10 according to the present embodiment is a setting assistance apparatus of various control parameters of a motor control device 20 that controls a motor 41.

Before details of the setting assistance apparatus 10 are described, a configuration and functions of the motor control device 20 will be described. As illustrated in Fig. 1, the motor control device 20 includes a nonvolatile memory 21, a motor drive circuit 22, and a control unit 23.

The motor drive circuit 22 is a circuit that supplies a drive current to the motor 41 under control of the control unit 23. The control unit 23 is a unit configured of a processor such as a micro-controller or a CPU and peripheral devices thereto. A main process that the control unit 23 executes is a motor control process of controlling the motor 41 (motor drive circuit 22) in response to a command input from an external device such as a PLC. Note that the control unit 23 is configured (programmed) to be able to execute other processes.

The nonvolatile memory 21 is a nonvolatile memory in which data can be rewritten, such as an electrically erasable and programmable read only memory (EEPROM). Various control parameter values (a position proportional gain, a velocity proportional gain, a model gain, and the like) set by a user are stored in the nonvolatile memory 21.

Fig. 2 illustrates a functional block diagram regarding a motor control process function of the control unit 23. As illustrated in the drawing, the control unit 23 is configured (programmed) to function as a position command filter 31, a position controller 33, a velocity controller 35, a current controller 36, and a velocity detector 37.

The position command filter 31 is a digital filter for filtering a position command. The position controller 33 is a functional block that generates a velocity command in accordance with a deviation between a position command filtered by the position command filter 31 and the position of the motor 41 (the position of the motor shaft) detected by the encoder 43 attached to the motor 41. The velocity detector 37 is a functional block that detects the velocity of the motor 41 through differentiation of the position of the motor 41 detected by the encoder 43. The velocity controller 35 is a functional block that generates a current command in accordance with a deviation between the velocity command generated by the position controller 33 and the velocity detected by the velocity detector 37. The current controller 36 is a functional block that generates a control signal (a PWM signal in the present embodiment) for supplying a current that conforms to a current command from the velocity controller 35 to the motor 41 and supplies the control signal to the motor drive circuit 22.

Each of the aforementioned control parameter values in the nonvolatile memory 21 is a value for designating a specific operation content of each functional block (such as the position controller 33), and the control unit 23 serves as the position controller 33 or the like to determine details of the process to be actually performed on the basis of each control parameter value stored in the nonvolatile memory 21.

Hereinafter, the configuration and the functions of the setting assistance apparatus 10 will be specifically described. Note that in the following description, a portion including the motor control device 20, the motor 41, the load machine 42, and the like will be referred to as a motor control system.

As described above, the motor control device 20 for which the setting assistance apparatus 10 assists setting of control parameters is a device that performs feedback control of the motor 41 on the basis of information from the encoder 43. The following configuration is employed for the setting assistance apparatus 10 such that such various control parameter values of the motor control device 20 can be set (adjusted) in consideration of responsiveness of the load machine 42.

As illustrated in Fig. 1, the setting assistance apparatus 10 is configured to be able to be connected to the motor control device 20 and a sensor 44 for detecting the position of the load machine 42 driven by the motor 41. Note that the sensor 44 connected to the setting assistance apparatus 10 is, for example, a linear scale (linear encoder).

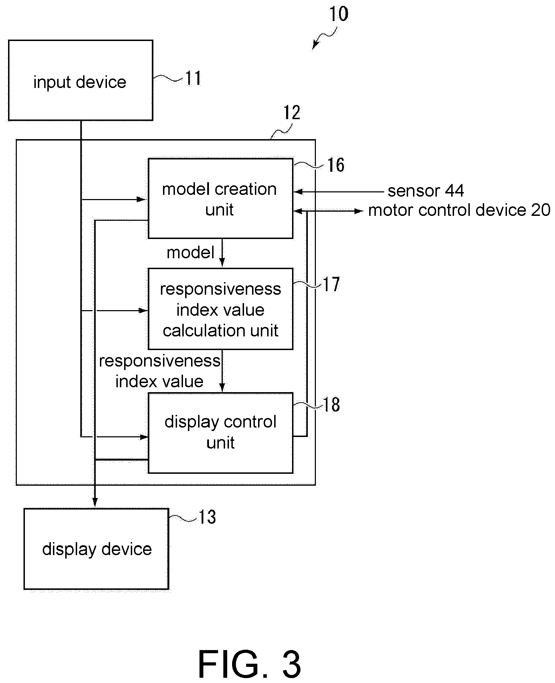

Also, as illustrated in Fig. 3, the setting assistance apparatus 10 includes an input device 11, a main body unit 12, and a display device 13.

The input device 11 is a device for inputting information, such as a mouse or a keyboard. The display device 13 is a device that displays characters, figures, and the like. The main body unit 12 is a unit including a processor as a main component. A setting assistance program is installed in the main body unit 12, and the main body unit 12 functions as a model creation unit 16, a responsiveness index value calculation unit 17, and a display control unit 18 by the processor in the main body unit 12 executing the setting assistance program.

[Model creation unit 16]

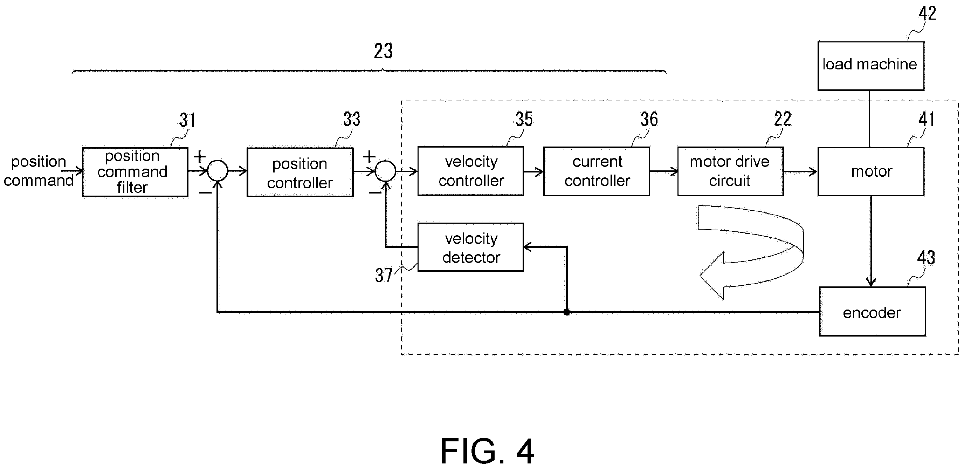

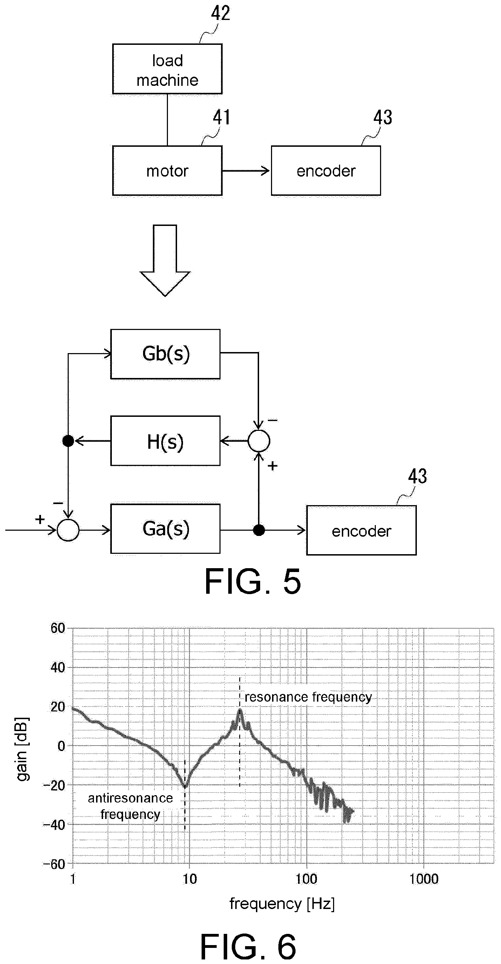

First, functions of the model creation unit 16 will be described using Figs. 4 to 6. Fig. 4 is an explanatory diagram of frequency response characteristics measured by the model creation unit 16 at the time of creating of a model, and Fig. 5 is an explanatory diagram of the model created by the model creation unit 16. In addition, Fig. 6 is an explanatory diagram of an example of a result of measurement of the frequency response characteristics performed by the model creation unit 16.

The model creation unit 16 is a functional block that creates a model for simulating responsiveness index values (the amount of overshooting and the settling time in the present embodiment) of the load machine 42.

The model creation unit 16 starts a model creation process when an instruction for creating a model is provided from the user through an operation performed on the input device 11. The model creation unit 16 that has started the model creation process measures frequency response characteristics (that is, velocity frequency response characteristics) of a portion of the motor control system indicated in the dotted-line frame in Fig. 4 by inputting a predetermined command to the motor control device 20 first.

Then, the model creation unit 16 creates a model that approximates a mechanical system configured of the motor 41, the load machine 42, and a coupling that establishes connection between the motor 41 and the load machine 42, on the basis of the result of measurement of the frequency response characteristics.

The model that the model creation unit 16 according to the present embodiment creates is a so-called two-inertia model that approximates the aforementioned mechanical system with Ga(s), Gb(s), and H(s) as schematically illustrated in Fig. 4.

Here, Ga(s), Gb(s), and H(s) are transfer functions defined by Equations (1) to (3) below. Also, Ja in Equations (1) to (3) below is an inertia on the drive side (on the side of the motor 41) of the aforementioned mechanical system, and Jb is an inertia on a driven side (on the side of the load machine 42) of the aforementioned mechanical system. K and D are a spring constant and a viscous friction coefficient, respectively, and s is a Laplace operator.

[Equation 1]

$$G_a(s) = \frac{1}{J_a s} \qquad \ldots (1)$$

$$G_b(s) = \frac{1}{J_b s} \qquad \ldots (2)$$

$$H(s) = \frac{K}{s} + D \qquad \ldots (3)$$

Note that the aforementioned result of measurement of the frequency response characteristics has an antiresonance frequency with a minimum gain and a resonance frequency with a maximum gain as illustrated in Fig. 6, and a gain on the side of a lower frequency than the antiresonance frequency changes at a constant rate of change of (-20 dB/dec). The model creation unit 16 calculates Ja + Jb from the gain of the obtained frequency response characteristics on the side of a lower frequency than the antiresonance frequency and calculates a ratio between Ja and Jb from the resonance ratio (a ratio between the resonance frequency and the antiresonance frequency) when the model is created from the result of measurement of the frequency response characteristics. The model creation unit 16 then calculates Ja and Jb from both the results of calculation. Further, the model creation unit 16 calculates the spring constant K from Ja and the antiresonance frequency and calculates the viscous friction D from the gains at the antiresonance frequency and the resonance frequency. The model creation unit 16 that has ended the calculation of the various parameters then ends the model creation process.

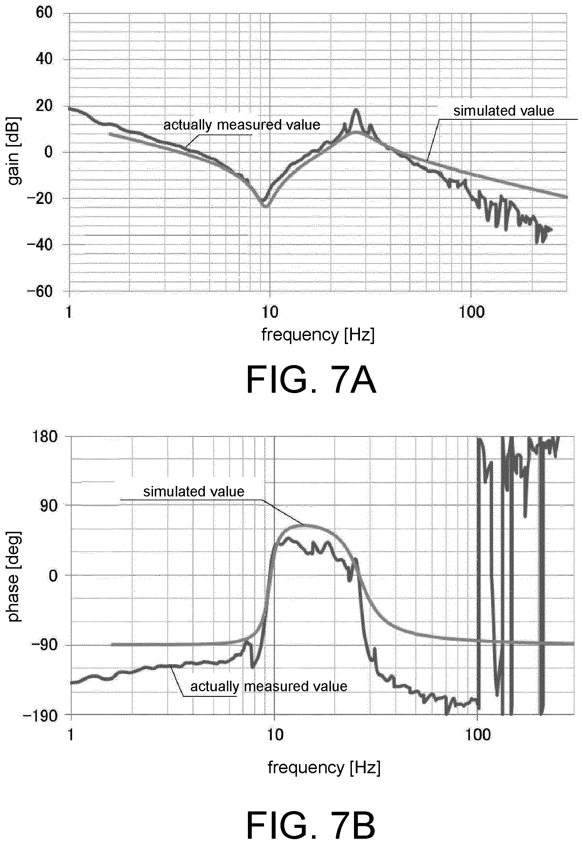

The model creation unit 16 may create a model with more parameters than the aforementioned two-inertia model. However, even if the aforementioned two-inertia model is used, it is possible to satisfactorily estimate the gain and the phase at each frequency as illustrated in Figs. 7A and 7B. Note that Fig. 7A is a frequency-gain characteristics diagram illustrating a relationship between a value obtained through simulation using the model created by the model creation unit 16 and an actually measured value according to the present embodiment, and Fig. 7B is a frequency-phase characteristics diagram illustrating a relationship between a value obtained through a simulation using the model and an actually measured value.

[Responsiveness index value calculation unit 17]

The responsiveness index value calculation unit 17 (Fig. 3) is a functional block that calculates a responsiveness index value (hereinafter, also referred to as a load-side responsiveness index value) indicating a responsiveness of the load machine 42 in a case in which the motor control device 20 is caused to operate in various states, through the simulation based on the model created by the model creation unit 16. Here, the various states are states in which values of two control parameters (hereinafter, also referred to as designated parameters) designated by the user as setting targets are different from each other. The various states may be states where control parameters other than the two designated parameters are fixed or may be states where there are control parameters, of which the values change in conjunction with the designated parameter values, from among the control parameters other than the two designated parameters.

The responsiveness index value calculation unit 17 also calculates the amount of overshooting and the settling time (hereinafter, also referred to as a motor-side responsiveness index value) of the motor shaft of the motor 41 at the time of calculation of the load-side responsiveness index value (the amount of overshooting and the settling time of the load machine 42) in each state.

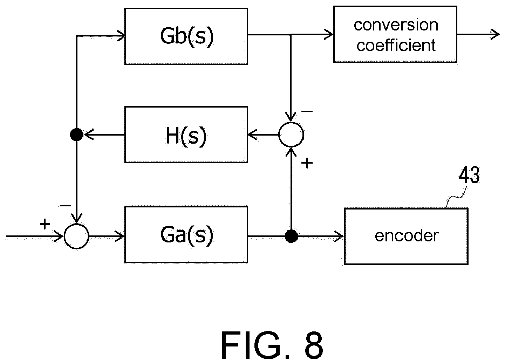

In addition, the responsiveness index value calculation unit 17 also has a function of converting the load-side responsiveness index value into a value in a coordinate system of the load machine 42 and outputting the converted value. In other words, the load-side responsiveness index value calculated using the aforementioned model (see Fig. 5) is a value in the coordinate system of the motor 41, and it is typically easier to ascertain a responsiveness of the load machine 42 if the load-side responsiveness index value is the value in the coordinate system of the load machine 42. The responsiveness index value calculation unit 17 is thus configured to be able to set a conversion coefficient (in other words, a value indicating the amount of change in position of the load machine 42 with respect to the amount of unit change in position of the motor 41) for converting the value in the coordinate system of the motor 41 into the value in the coordinate system of the load machine 42. Also, in a case in which the conversion coefficient is set, the responsiveness index value calculation unit 17 outputs a value obtained by multiplying the load-side responsiveness index value calculated with the model by the conversion coefficient as a result of the simulation of the load-side responsiveness index value as schematically illustrated in Fig. 8.

[Display control unit 18]

The display control unit 18 (Fig. 3) is a functional block that displays, on a screen of the display device 13, a result (hereinafter, also referred to as an evaluation result) of the calculation of the various responsiveness index values performed by the responsiveness index value calculation unit 17 in a form designated by the user.

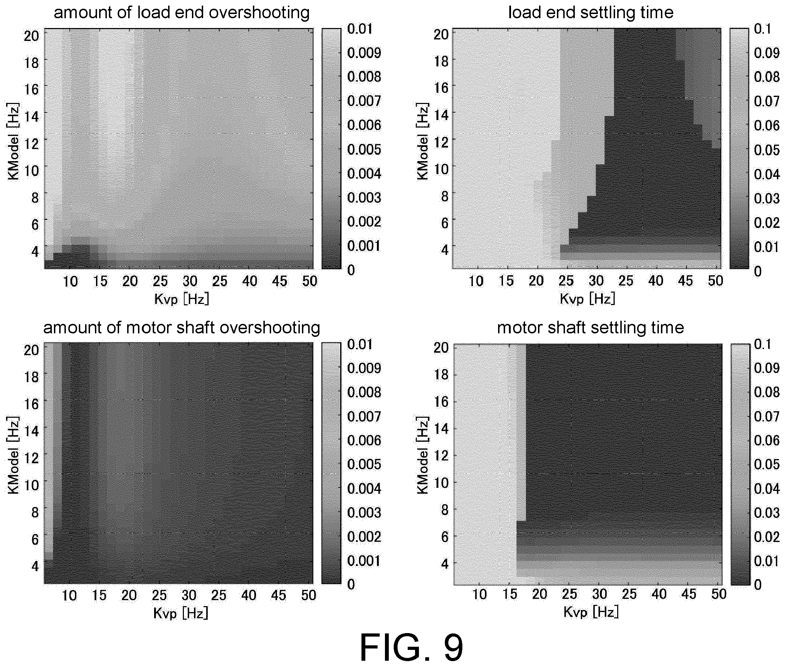

In a case in which an instruction for displaying the evaluation result in an ordinary form is provided in a state in which a simulation designating a velocity proportional gain Kvp and a model gain KModel as setting targets has been completed, for example, the display control unit 18 shows an image as illustrated in Fig. 9 on the screen of the display device 13. In other words, the display control unit 18 displays a contour diagram representing the amount of overshooting of the load machine 42 ("the amount of load end overshooting"), a contour diagram representing the settling time of the load machine 42 ("load end settling time"), a contour diagram representing the amount of overshooting of the motor shaft ("the amount of motor shaft overshooting"), and a contour diagram representing the settling time of the motor shaft ("motor shaft settling time") at the same time on the screen of the display device 13 in this case.

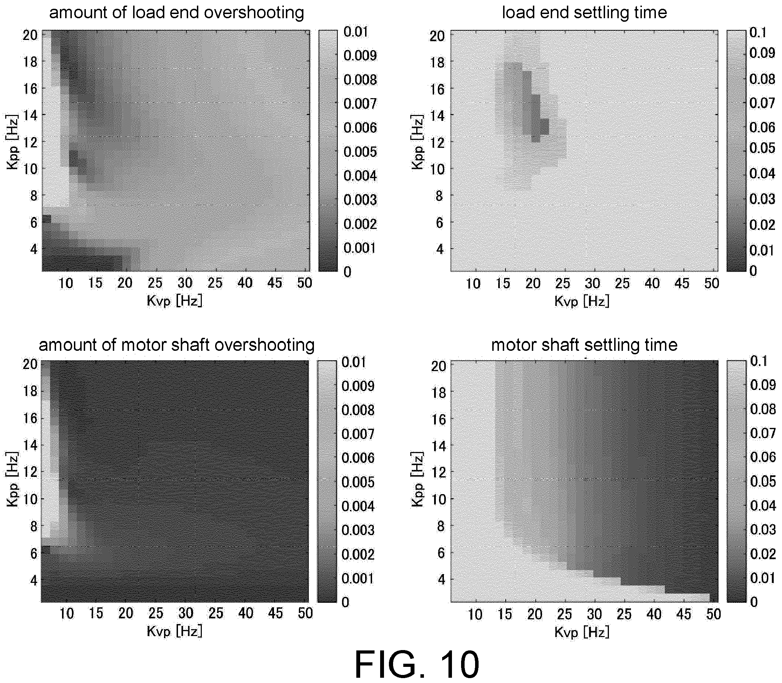

Also, in a case in which an instruction for displaying the evaluation result in an ordinary form is provided in a state in which a simulation designating a velocity proportional gain Kvp and a position proportional gain Kpp as setting targets has been completed, the display control unit 18 displays an image as illustrated in Fig. 10 on the screen of the display device 13.

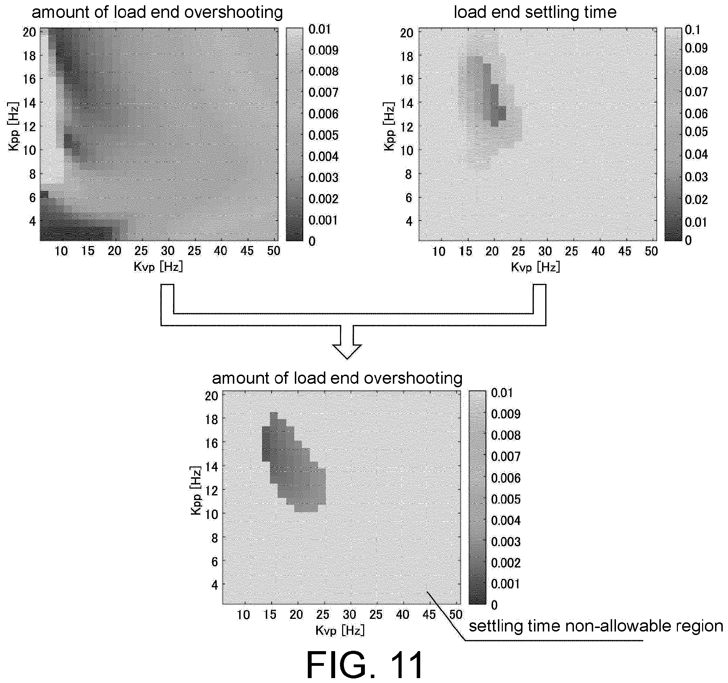

In a case in which an instruction for displaying the load (or motor) responsiveness index value that accompanies designation of an allowable range of one of responsiveness index values (that is, either the amount of overshooting or the settling time) is input, the display control unit 18 displays, on the screen of the display device 13, a contour diagram of the other load (or motor) responsiveness index value in such a form that the user can ascertain a combination of designated parameter values in which the one of the responsiveness index values does not fall within an allowable range. Specifically, when an instruction for displaying a load-side responsiveness index value for which an allowable range of the settling time is set to be equal to or less than 0.09 sec is input, for example, the display control unit 18 displays a contour diagram of the amount of load end overshooting (the lower side in Fig. 11) in which the color of the region where the settling time does not fall within the allowable range is set to a color indicating that the amount of overshooting is the maximum amount, as schematically illustrated in Fig. 11.

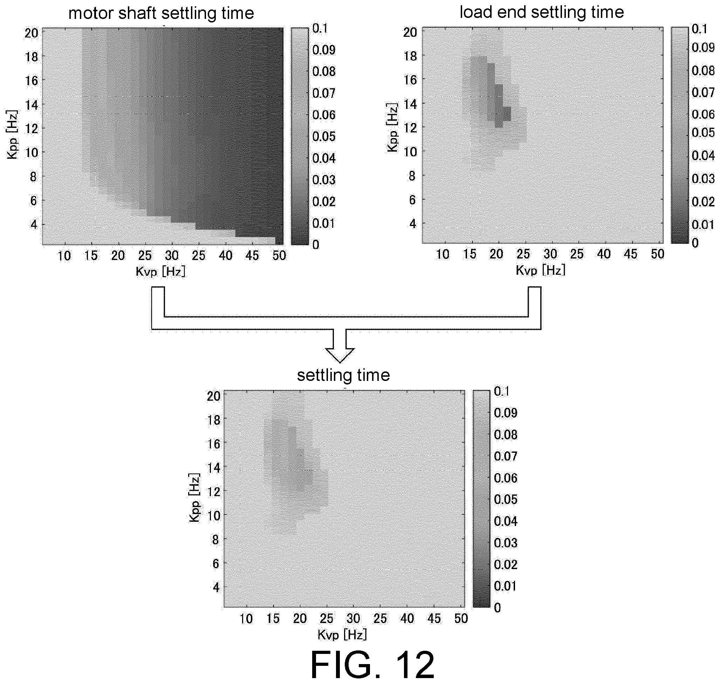

In addition, the display control unit 18 also has a function of displaying, on the screen of the display device 13, a contour diagram as illustrated on the lower side in Fig. 12, that is, a contour diagram representing the worst value of the load-side responsiveness index value and the motor-side responsiveness index value for each combination of designated parameters.

Further, the display control unit 18 is also configured to perform a process of changing a setting value in the motor control device 20 in relation to the two control parameters that are setting targets to a value at one designated point in a case in which a predetermined operation that accompanies designation of the one point in any of the contour diagrams on the screen of the display device 13 is performed.

As described above, the setting assistance apparatus 10 according to the present embodiment can present, to the user, a responsiveness index value indicating a responsiveness of the load machine 42. According to the setting assistance apparatus 10, it is thus possible for the user to perform setting of control parameters of the motor control device 20 in a form that considers the responsiveness of the load machine 42. As a result, it is possible to prevent setting of such control parameters with which the amount of overshooting and the settling time of the load machine 42 do not fall within allowable ranges.

<<Second embodiment>>

Hereinafter, a configuration and operations of a setting assistance apparatus 10b according to a second embodiment of the present invention will be described with a focus on points different from those in the setting assistance apparatus 10 according to the first embodiment.

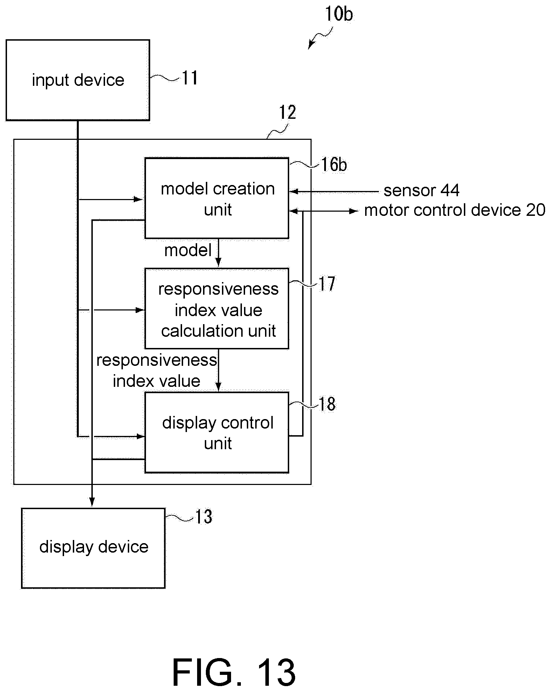

Fig. 13 illustrates an overview configuration of the setting assistance apparatus 10b according to the second embodiment.

As illustrated in the drawing, the setting assistance apparatus 10b is a device in which the model creation unit 16 (see Fig. 3) in the main body unit 12 in the setting assistance apparatus 10 is replaced with a model creation unit 16b.

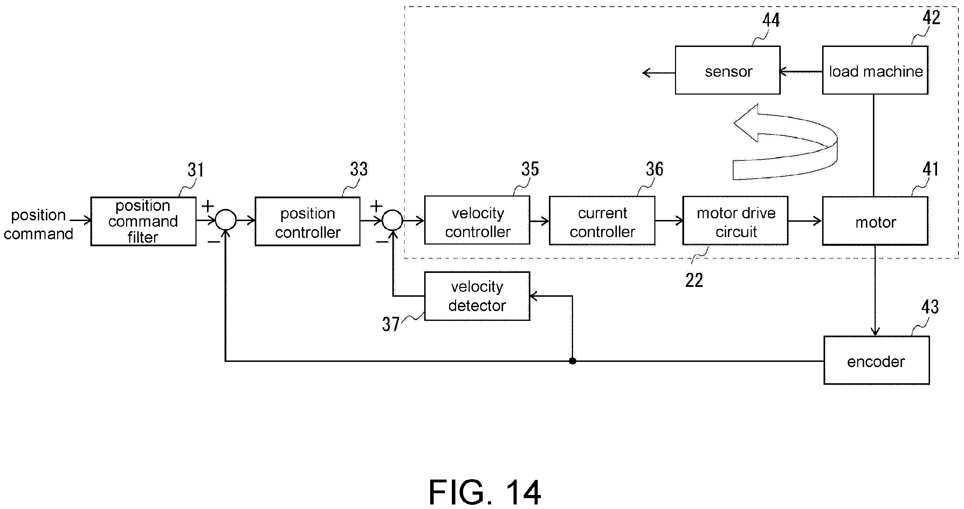

The model creation unit 16b is a functional block that measures frequency response characteristics (that is, frequency response characteristics of a system using, as an input, a velocity command for a motor 41 and using, as an output, a result of detection of the position of the load machine 42 performed by a sensor 44 attached to a load machine 42) at a portion illustrated in the dotted-line frame in Fig. 14 in a motor control system and creates a model from a result of the measurement.

In other words, the setting assistance apparatus 10b is a device achieved by amending the setting assistance apparatus 10 to such a device that directly obtains transfer functions (see Fig. 5) to be used as a model.

The setting assistance apparatus 10b with the aforementioned configuration can also present, to the user, a responsiveness index value indicating responsiveness of the load machine 42. It is thus possible for the user to perform setting of the control parameters to the motor control device 20 in a form that considers the responsiveness of the load machine 42 according to the setting assistance apparatus 10b as well. As a result, it is possible to prevent setting of such control parameters with which the amount of overshooting and the settling time of the load machine 42 do not fall within allowable ranges.

< <Third embodiments >

Hereinafter, a configuration and operations of a setting assistance apparatus 10c according to a third embodiment of the present invention will be described with a focus on points different from those in the setting assistance apparatus 10 according to the first embodiment.

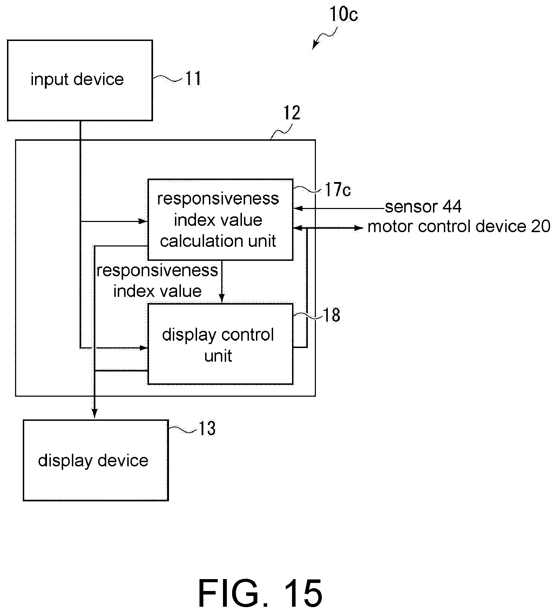

Fig. 15 illustrates an overview configuration of the setting assistance apparatus 10c according to the third embodiment.

As is obvious from comparison between Fig. 15 and Fig. 3, the setting assistance apparatus 10c is a device achieved by modifications of deleting the model creation unit 16 from the main body unit 12 (see Fig. 3) of the setting assistance apparatus 10 and replacing the responsiveness index value calculation unit 17 with a responsiveness index value calculation unit 17c.

The responsiveness index value calculation unit 17c is a functional block that actually measures various responsiveness index values (that obtains various responsiveness index values from outputs of an encoder 43 and a sensor 44). Note that "actually measuring various responsiveness index values" means obtaining various responsiveness index values using results of measurement of outputs from the encoder 43 and the sensor 44.

The setting assistance apparatus 10c with the aforementioned configuration can also present, to the user, the responsiveness index value indicating responsiveness of the load machine 42. Thus, it is possible for the user to perform setting of control parameters to the motor control device 20 in a form that considers the responsiveness of the load machine 42 by the setting assistance apparatus 10c as well. As a result, it is possible to prevent setting of such control parameters with which the amount of overshooting and the settling time of the load machine 42 do not fall within allowable ranges.

<<Modification examples>>

Various modifications can be made to the setting assistance apparatus (10, 10b, 10c) according to each of the aforementioned embodiments. For example, the devices for assisting in setting according to the first and second embodiments may be modified to a device that actually measures the motor-side responsiveness index value or the load-side responsiveness index value. Also, the setting assistance apparatus according to the first embodiment may be modified into a device that sets and uses Ja, Jb, and the like.

The frequency response characteristics measured to create a model may be one obtained by using a position command or a torque command as an input and using a velocity or acceleration of the load machine 42 as an output. It is a matter of course that the setting assistance apparatus may be modified to one adapted to display a contour diagram (a contour diagram with an isoline displayed, for example) in a different form from that as described above or to one adapted to display the evaluation result in a diagram (for example, a graph) other than a contour diagram.

[Reference Signs List]

10, 10b, 10c Setting assistance apparatus
11 Input device
12 Main body unit
13 Display device
16, 16b Model creation unit
17, 17c Responsiveness index value calculation unit
18 Display control unit
20 Motor control device
21 Nonvolatile memory
22 Motor drive circuit
23 Control unit
31 Position command filter
33 Position controller
35 Velocity controller
36 Current controller
37 Velocity detector
41 Motor
42 Load machine
43 Encoder
44 Sensor

**Claims**

1. A setting assistance apparatus (10), for assisting a setting of a plurality of control parameters of a motor control device (20), the setting assistance apparatus using a position of a shaft of a motor (41) that drives a load machine (42) to control the motor, the setting assistance apparatus (10) comprising:

   a specification unit (17), for each of a plurality of states with different values of a position proportional gain among the plurality of control parameters, configured to specify a performance index value indicating a responsiveness of the load machine when the motor control device controls the motor in the each of the plurality of states; and
   a presentation unit (18), configured to present to a user the performance index value for the each of the plurality of states specified by the specification unit;

   **characterized in that**:

   the position of a shaft of a motor (41) is detected by an encoder (43) attached to the motor (41); and
   the motor control device controls the motor in each of the plurality of states by detecting the position of the load machine using a sensor.

2. The setting assistance apparatus according to claim 1, wherein the specification unit (17) specifies the performance index value for the each of the plurality of states through a simulation based on a model that approximates the load machine (42).

3. The setting assistance apparatus according claim 2, wherein the model is a multi-inertia model that takes at least an inertia of the motor (41) and an inertia of the load machine (42) into consideration.

4. The setting assistance apparatus according claim 2 or 3, further comprising:
   a model creation unit (16), configured to measure frequency response characteristics of a system that uses, as an input, a command for the motor (41) and uses, as an output, a result of detecting any of a position, a velocity, and an acceleration of the load machine (42) obtained by the sensor attached to the load machine and creates the model on the basis of a result of measurement.

5. The setting assistance apparatus according to claim 4, wherein the model creation unit (16) specifies an antiresonance frequency, a resonance frequency, a gain at the antiresonance frequency, a gain at the resonance frequency, and a gain on the side of a lower frequency than the antiresonance frequency changing at a constant rate of change of -20 dB/dec from the measured frequency response characteristics and creates the model on the basis of a result of specifying.

6. The setting assistance apparatus according to claim 1, wherein for the each of the plurality of states, the specification unit (17) causes the motor control device (20) to control the motor (41), collects an output of the sensor attached to the load machine (42), and specifies the performance index value on the basis of the collected output in the state.

7. The setting assistance apparatus according to any one of claims 1 to 6,

   wherein the specification unit (17) also specifies, for the each of the plurality of states, a motor-side performance index value indicating responsiveness of a motor shaft of the motor (41) when the motor control device (20) is caused to control the motor in the state, and
the performance index value specified for each state by the specification unit (17) is presented to a user along with the motor-side performance index value specified for each state by the specification unit (17).

8. The setting assistance apparatus according to claim 7, wherein the specification unit (17) specifies the motor-side performance index value on the basis of information from the encoder (43).

9. The setting assistance apparatus according to claim 7, wherein the specification unit (17) specifies the motor-side performance index value through a simulation.

10. The setting assistance apparatus according to any one of claims 1 to 9, wherein the performance index value is information indicating responsiveness of the load machine (42) in units in a coordinate system unique to the load machine (42).

11. The setting assistance apparatus according to any one of claims 1 to 10,

wherein the specification unit (17) specifies, as the performance index value for the each of the plurality of states, a first performance index value indicating first responsiveness of the load machine (42) and a second performance index value indicating second responsiveness of the load machine (42), and
the presentation unit (17) presents, to a user, the second performance index value in each state in which the first performance index value falls within an allowable range in such a manner that the user is able to ascertain each state in which the first performance index value does not fall in the allowable range.

12. The setting assistance apparatus according to claim 7,
wherein,
for the each of the plurality of states, the presentation unit presents, to a user, a value that is either the performance index value or the motor-side performance index value and indicates worse responsiveness.

13. The setting assistance apparatus according to any one of claims 1 to 12,

wherein the specification unit (17) specifies the performance index value for the each of the plurality of states in which combinations of values of the position proportional gain and values of an other control parameter from among the plurality of control parameters are different from each other, and
the presentation unit (17) presents, to a user, the performance index value for the each of the plurality of states by displaying a contour diagram in which the values of the position proportional gain and the values of the other control parameter are represented by one or the other of a vertical axis and a horizontal axis, respectively, and the performance index value is indicated with a color or a luminance.

**Patentansprüche**

1. Einstellungsunterstützungsvorrichtung (10) zum Unterstützen einer Einstellung einer Vielzahl von Steuerparametern einer Motorsteuerungsvorrichtung (20), wobei die Einstellungsunterstützungsvorrichtung eine Position einer Welle eines Motors (41) verwendet, die eine Lastmaschine (42) antreibt, um den Motor zu steuern, wobei die Einstellungsunterstützungsvorrichtung (10) umfasst:

eine Spezifikationseinheit (17), die für jeden einer Vielzahl von Zuständen mit unterschiedlichen Werten einer positionsproportionalen Verstärkung unter der Vielzahl von Steuerparametern konfiguriert ist, um einen Leistungsindexwert zu spezifizieren, der ein Ansprechverhalten der Lastmaschine anzeigt, wenn die Motorsteuerungsvorrichtung den Motor in jedem der Vielzahl von Zuständen steuert; und
eine Darstellungseinheit (18), die so konfiguriert ist, dass sie einem Benutzer den Leistungsindexwert für jeden der Vielzahl von durch die Spezifikationseinheit spezifizierten Zuständen darstellt;
**dadurch gekennzeichnet, dass**:

die Position einer Welle eines Motors (41) durch einen an dem Motor (41) angebrachten Codierer (43) erfasst wird; und
die Motorsteuerungsvorrichtung den Motor in jedem der Vielzahl von Zuständen steuert, indem sie die Position der Lastmaschine unter Verwendung eines Sensors erfasst.

2. Einstellungsunterstützungsvorrichtung nach Anspruch 1, wobei die Spezifikationseinheit (17) den Leistungsindexwert für jeden der Vielzahl von Zuständen durch eine Simulation auf der Grundlage eines Modells spezifiziert, das die Lastmaschine (42) approximiert.

**3.** Einstellungsunterstützungsvorrichtung nach Anspruch 2, wobei das Modell ein Multiträgheitsmodell ist, das wenigstens eine Trägheit des Motors (41) und eine Trägheit der Lastmaschine (42) berücksichtigt.

**4.** Einstellungsunterstützungsvorrichtung nach Anspruch 2 oder 3, ferner umfassend:
eine Modellerzeugungseinheit (16), die so konfiguriert ist, dass sie Frequenzgangcharakteristiken eines Systems misst, das als eine Eingabe einen Befehl für den Motor (41) verwendet und als eine Ausgabe ein Ergebnis von Erfassung einer Position, einer Geschwindigkeit und einer Beschleunigung der Lastmaschine (42) verwendet, erhalten durch den an der Lastmaschine angebrachten Sensor, und das Modell auf der Grundlage eines Messergebnisses erzeugt.

**5.** Einstellungsunterstützungsvorrichtung nach Anspruch 4, wobei die Modellerzeugungseinheit (16) eine Antiresonanzfrequenz, eine Resonanzfrequenz, eine Verstärkung bei der Antiresonanzfrequenz, eine Verstärkung bei der Resonanzfrequenz und eine Verstärkung auf der Seite einer niedrigeren Frequenz als die Antiresonanzfrequenz, die sich mit einer konstanten Änderungsrate von -20 dB/dec aus den gemessenen Frequenzgangcharakteristiken ändert, spezifiziert und das Modell auf der Grundlage eines Ergebnisses von Spezifizierung erzeugt.

**6.** Einstellungsunterstützungsvorrichtung nach Anspruch 1, wobei die Spezifizierungseinheit (17) für jeden der Vielzahl von Zuständen die Motorsteuerungsvorrichtung (20) veranlasst, den Motor (41) zu steuern, eine Ausgabe des an der Lastmaschine (42) angebrachten Sensors erfasst und den Leistungsindexwert auf der Grundlage der erfassten Ausgabe in dem Zustand spezifiziert.

**7.** Einstellungsunterstützungsvorrichtung nach einem der Ansprüche 1 bis 6,

wobei die Spezifikationseinheit (17) auch für jeden der Vielzahl von Zuständen einen motorseitigen Leistungsindexwert spezifiziert, der Ansprechverhalten einer Motorwelle des Motors (41) anzeigt, wenn die Motorsteuerungsvorrichtung (20) veranlasst wird, den Motor in dem Zustand zu steuern, und
der für jeden Zustand durch die Spezifikationseinheit (17) spezifizierte Leistungsindexwert einem Benutzer zusammen mit dem für jeden Zustand durch die Spezifikationseinheit (17) spezifizierten motorseitigen Leistungsindexwert dargestellt wird.

**8.** Einstellungsunterstützungsvorrichtung nach Anspruch 7, wobei die Spezifikationseinheit (17) den motorseitigen Leistungsindexwert auf der Grundlage von Informationen aus dem Codierer (43) spezifiziert.

**9.** Einstellungsunterstützungsvorrichtung nach Anspruch 7, wobei die Spezifikationseinheit (17) den motorseitigen Leistungsindexwert durch eine Simulation spezifiziert.

**10.** Einstellungsunterstützungsvorrichtung nach einem der Ansprüche 1 bis 9, wobei der Leistungsindexwert eine Information ist, die Ansprechverhalten der Lastmaschine (42) in Einheiten in einem für die Lastmaschine (42) eindeutigen Koordinatensystem anzeigt.

**11.** Einstellungsunterstützungsvorrichtung nach einem der Ansprüche 1 bis 10,

wobei die Spezifikationseinheit (17) als den Leistungsindexwert für jeden der Vielzahl von Zuständen einen ersten Leistungsindexwert, der ein erstes Ansprechverhalten der Lastmaschine (42) anzeigt, und einen zweiten Leistungsindexwert, der ein zweites Ansprechverhalten der Lastmaschine (42) anzeigt, spezifiziert, und
die Darstellungseinheit (17) einem Benutzer den zweiten Leistungsindexwert in jedem Zustand, in dem der erste Leistungsindexwert in einen zulässigen Bereich fällt, in einer solchen Weise darstellt, dass der Benutzer in der Lage ist, jeden Zustand festzustellen, in dem der erste Leistungsindexwert nicht in den zulässigen Bereich fällt.

**12.** Einstellungsunterstützungsvorrichtung nach Anspruch 7,
wobei die Darstellungseinheit einem Benutzer für jeden der Vielzahl von Zuständen einen Wert anzeigt, der entweder der Leistungsindexwert oder der motorseitige Leistungsindexwert ist und schlechteres Ansprechverhalten anzeigt.

**13.** Einstellungsunterstützungsvorrichtung nach einem der Ansprüche 1 bis 12,

wobei die Spezifikationseinheit (17) den Leistungsindexwert für jeden der Vielzahl von Zuständen spezifiziert, in denen Kombinationen von Werten der positionsproportionalen Verstärkung und Werten eines anderen Steuerparameters aus der Vielzahl von Steuerparametern voneinander verschieden sind, und
die Darstellungseinheit (17) einem Benutzer den Leistungsindexwert für jeden der Vielzahl von Zuständen durch Anzeigen eines Konturdiagramms darstellt, in dem die Werte der positionsproportionalen Verstärkung und die Werte des anderen Steuerparameters durch eine oder die andere von einer vertikalen Achse bzw. einer horizontalen Achse dargestellt werden und der Leistungsindexwert mit einer Farbe oder einer Luminanz angezeigt wird.

**Revendications**

1. Appareil d'aide au réglage (10), pour aider un réglage d'une pluralité de paramètres de commande d'un dispositif de commande de moteur (20), l'appareil d'aide au réglage utilisant une position d'un arbre d'un moteur (41) qui entraîne une machine de charge (42) pour commander le moteur, l'appareil d'aide au réglage (10) comprenant :

   une unité de spécification (17), pour chacun d'une pluralité d'états avec des valeurs différentes d'un gain proportionnel de position parmi la pluralité de paramètres de commande, configurée pour spécifier une valeur d'indice de performance indiquant une réactivité de la machine de charge lorsque le dispositif de commande de moteur commande le moteur dans chacun de la pluralité d'états ; et
   une unité de présentation (18), configurée pour présenter, à un utilisateur, la valeur d'indice de performance pour chacun de la pluralité d'états spécifiée par l'unité de spécification ;
   **caractérisé en ce que** :

   la position d'un arbre d'un moteur (41) est détectée par un codeur (43) attaché au moteur (41) ; et
   le dispositif de commande de moteur commande le moteur dans chacun de la pluralité d'états par la détection de la position de la machine de charge en utilisant un capteur.

2. Appareil d'aide au réglage selon la revendication 1, dans lequel l'unité de spécification (17) spécifie la valeur d'indice de performance pour chacun de la pluralité d'états par l'intermédiaire d'une simulation sur la base d'un modèle qui approxime la machine de charge (42).

3. Appareil d'aide au réglage selon la revendication 2, dans lequel le modèle est un modèle d'inerties multiples qui prend en compte au moins une inertie du moteur (41) et une inertie de la machine de charge (42).

4. Appareil d'aide au réglage selon la revendication 2 ou 3, comprenant en outre :
   une unité de création de modèle (16), configurée pour mesurer des caractéristiques de réponse de fréquence d'un système qui utilise, en tant qu'entrée, une instruction pour le moteur (41) et utilise, en tant que sortie, un résultat de la détection de l'une quelconque parmi une position, une vitesse et une accélération de la machine de charge (42) obtenu par le capteur attaché à la machine de charge et crée le modèle sur la base d'un résultat de mesure.

5. Appareil d'aide au réglage selon la revendication 4, dans lequel l'unité de création de modèles (16) spécifie une fréquence d'antirésonance, une fréquence de résonance, un gain à la fréquence d'antirésonance, un gain à la fréquence de résonance, et un gain sur le côté d'une fréquence inférieure à la fréquence d'antirésonance changeant à un taux de changement constant de -20 dB/déc à partir des caractéristiques de réponse de fréquence mesurées et crée le modèle sur la base d'un résultat de la spécification.

6. Appareil d'aide au réglage selon la revendication 1, dans lequel, pour chacun de la pluralité d'états, l'unité de spécification (17) amène le dispositif de commande de moteur (20) à commander le moteur (41), collecte une sortie du capteur attaché à la machine de charge (42), et spécifie la valeur d'indice de performance sur la base de la sortie collectée dans l'état.

7. Appareil d'aide au réglage selon l'une quelconque des revendications 1 à 6,

   dans lequel l'unité de spécification (17) spécifie également, pour chacun de la pluralité d'états, une valeur d'indice de performance côté moteur indiquant une réactivité d'un arbre de moteur du moteur (41) lorsque le dispositif de commande de moteur (20) est amené à commander le moteur dans l'état, et
   la valeur d'indice de performance spécifiée pour chaque état par l'unité de spécification (17) est présentée à un utilisateur avec la valeur d'indice de performance côté moteur spécifiée pour chaque état par l'unité de spécification (17).

8. Appareil d'aide au réglage selon la revendication 7, dans lequel l'unité de spécification (17) spécifie la valeur d'indice de performance côté moteur sur la base d'informations provenant du codeur (43).

9. Appareil d'aide au réglage selon la revendication 7, dans lequel l'unité de spécification (17) spécifie la valeur d'indice de performance côté moteur par l'intermédiaire d'une simulation.

10. Appareil d'aide au réglage selon l'une quelconque des revendications 1 à 9, dans lequel la valeur d'indice de performance est une information indiquant une réactivité de la machine de charge (42) en unités dans un système de coordonnées unique à la machine de charge (42).

11. Appareil d'aide au réglage selon l'une quelconque des revendications 1 à 10,

dans lequel l'unité de spécification (17) spécifie, en tant que la valeur d'indice de performance pour chacun de la pluralité d'états, une première valeur d'indice de performance indiquant une première réactivité de la machine de charge (42) et une deuxième valeur d'indice de performance indiquant une deuxième réactivité de la machine de charge (42), et

l'unité de présentation (17) présente, à un utilisateur, la deuxième valeur d'indice de performance dans chaque état dans lequel la première valeur d'indice de performance se trouve à l'intérieur d'une plage admissible de telle manière que l'utilisateur puisse déterminer chaque état dans lequel la première valeur d'indice de performance ne se trouve pas dans la plage admissible.

12. Appareil d'aide au réglage selon la revendication 7, dans lequel,
pour chacun de la pluralité d'états, l'unité de présentation présente, à un utilisateur, une valeur qui est soit la valeur d'indice de performance soit la valeur d'indice de performance côté moteur et indique une plus mauvaise réactivité.

13. Appareil d'aide au réglage selon l'une quelconque des revendications 1 à 12,

dans lequel l'unité de spécification (17) spécifie la valeur d'indice de performance pour chacun de la pluralité d'états dans laquelle des combinaisons de valeurs du gain proportionnel de position et de valeurs d'un autre paramètre de commande parmi la pluralité de paramètres de commande sont différentes les unes des autres, et

l'unité de présentation (17) présente, à un utilisateur, la valeur d'indice de performance pour chacun de la pluralité d'états par l'affichage d'un diagramme de contour dans lequel les valeurs du gain proportionnel de position et les valeurs de l'autre paramètre de commande sont représentées par l'un ou l'autre respectivement d'un axe vertical et d'un axe horizontal, et la valeur d'indice de performance est indiquée avec une couleur ou une luminance.

**FIG. 1**

**FIG. 2**

10

input device ∽11

12

model creation unit ∽16

— sensor 44
— motor control device 20

model ↓

responsiveness index value calculation unit ∽17

responsiveness index value ↓

display control unit ∽18

display device ∽13

FIG. 3

FIG. 4

FIG. 5

FIG. 6

FIG. 7A

FIG. 7B

FIG. 8

FIG. 9

amount of load end overshooting

load end settling time

amount of motor shaft overshooting

motor shaft settling time

FIG. 10

FIG. 11

FIG. 12

10b

input device ～11

12

model creation unit ～16b

← sensor 44
← motor control device 20

model

responsiveness index value calculation unit ～17

responsiveness index value

display control unit ～18

display device ～13

# FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017167607 A
- JP H06217578 A
- US 2017262573 A1
- JP 2003079174 A